# EUROPÄISCHE PATENTSCHRIFT

(11) **EP 1 178 249 B1**
(45) Veröffentlichungstag und Bekanntmachung des Hinweises auf die Patenterteilung: **13.09.2006**
(21) Anmeldenummer: 01117013.1
(22) Anmeldetag: 12.07.2001
(51) Int. Cl.: F16H 63/48, B60T 7/12

(54) **Elektronische Einheit zum automatischen Aktivieren einer Parksperre und Verfahren zur Verhinderung der automatischen Aktivierung der Parksperre in Kraftfahrzeugen**
Control unit for automatic activation of a parking brake in a motor vehicle and method for preventing the automatic activation
Unité de commande électronique pour l'activation d'un frein de stationnement dans un véhicule automobile et méthode pour empêcher l'activation automatique

(30) Priorität: 02.08.2000 DE 10037575
(43) Veröffentlichungstag der Anmeldung: 06.02.2002
(73) Patentinhaber: Bayerische Motoren Werke Aktiengesellschaft, 80809 München (DE)
(72) Erfinder: Ehrmaier, Rudolf, 81927 München (DE); Sappler, Anton, 81369 München (DE); Schmerer, Reinhard, 85250 Pipinsried (DE)

(56) Entgegenhaltungen:
- DE-A- 19 629 426
- DE-A- 19 801 064
- DE-A- 19 820 920
- US-A- 4 561 527
- US-A- 4 572 319
- PATENT ABSTRACTS OF JAPAN Bd. 1998, Nr. 09, 31. Juli 1998 (1998-07-31) & JP 10 095319 A (FUJITSU TEN LTD), 14. April 1998 (1998-04-14)

## Beschreibung

Die Erfindung betrifft eine elektronische Einheit zum automatischen Aktivieren einer Parksperre bzw. ein Verfahren zur Verhinderung der automatischen Aktivierung der Parksperre in Kraftfahrzeugen.

Die US 4,561,527, die alle Merkmale des Oberbegriffes des unabhängigen Anspruchs 1 sowie ein Verfahren zur Verhinderung der automatischen Aktivierung einer Parksperre zeigt, offenbart ein elektrisches Parkbremssystem, das sowohl automatisch als auch manuell aktivierbar ist. Weiterhin wird zum technischen Hintergrund auf die US 4,572,319 hingewiesen.

Aus der DE 196 25 019 A1 ist beispielsweise eine elektronische Einheit in Form eines Getriebesteuergeräts bekannt, das zu anderen Fahrzeugfunktionen hinzu zum automatischen Aktivieren einer Parksperre verwendet wird. Die Parksperre wird abhängig von mindestens einem vorgegebenen Betriebszustand eines Kraftfahrzeugs, das mit einem mechanischen Zündschlüssel in Betrieb genommen wird, automatisch aktiviert. Ein derartiger Betriebszustand ist beispielsweise das Unterschreiten einer bestimmten Fahrzeuggeschwindigkeitsschwelle, die Stellung des Zündschlüssels im Zündschloss und/oder der Zustand der Fahrzeugtür (geöffnet/geschlossen). Spätestens aber nach dem Abziehen des Zündschlüssels aus dem Zündschloss wird die Parksperre aktiviert.

Vermehrt werden in Zukunft zur Inbetriebnahme von Kraftfahrzeugen schlüssellose Zugangs- bzw. Fahrberechtigungssysteme eingesetzt. Ein derartiges System ist beispielsweise die aus der DE 198 01 064 A1 und der DE 198 23 707 A1 bekannte elektronische Berechtigungsnachweiseinrichtung. Hierbei findet eine drahtlose Code-Übertragung zur Feststellung der Zugangs- und Fahrberechtigung statt. Ein mechanischer Zündschlüssel wird lediglich noch als Redundanz vorgesehen. Das Fahrzeug wird mit einem Drehschalter bei gleichzeitiger Überprüfung der Berechtigung mittels der Berechtigungsnachweiseinrichtung gestartet und ausgeschaltet. Nach einem Ausschalten ist also kein Abziehen eines mechanischen Schlüssels erforderlich.

Dennoch wird grundsätzlich das automatische Aktivieren einer Parksperre bei abgezogenem Schlüssel, wobei eine elektronische Berechtigungsnachweiseinrichtung einem konventionellen Schlüsselsystem funktionell gleichzusetzen ist, in einigen Ländern gesetzlich gefordert. Aus Sicherheitsgründen wird daher bei Fahrzeugen ohne mechanischem Schlüssel die Parksperre unabhängig von einer Schlüsselstellung abhängig von mindestens einem anderen Betriebsparameter bzw. Betriebszustand automatisch aktiviert. Hierbei werden insbesondere Betriebsparameter bzw. Signale ausgewertet, die auf ein Verlassen des Fahrzeuges hinweisen, wie z. B. eine offene Fahrertür (abfragbar über einen Schalter in der Tür) oder ein leerer Fahrersitz (erkennbar über Sitzbelegungssensoren). Hiermit sind jedoch in einigen Situationen unerwünschte Beschränkungen verbunden. Beispielsweise ist damit ein Anschieben eines "abgestorbenen" Fahrzeuges nicht mehr möglich.

Es ist Aufgabe der Erfindung, unerwünschte Beschränkungen in Verbindung mit einer automatisierten Parksperre zu verhindern, ohne die Sicherheit zu beeinträchtigen.

Diese Aufgabe wird durch die Merkmale des Patentanspruchs 1 gelöst. Vorteilhafte Weiterbildungen der Erfindung sind die Gegenstände der abhängigen Patentansprüche.

Die Erfindung betrifft Fahrzeuge mit elektronischem Zugangs- und Fahrberechtigungssystem, bei dem kein mechanischer Schlüssel mehr vorhanden ist und bei dem somit ein Schlüssel auch nicht mehr abgezogen werden kann. Derartige Zugangs- und Fahrberechtigungssysteme sind beispielsweise mit dem Fahrer mitgeführte Code-Karten, die mit einem im Fahrzeug verbauten Berechtigungsüberprüfgerät drahtlos (z. B. per Funk) kommunizieren. Grundsätzlich soll dabei die Parksperre, vorzugsweise in Form des Einlegens der Parkposition bei Vorhandensein eines Automatikgetriebes oder aber auch in Form des Einlegens einer Feststellbremse, automatisch beim Verlassen des Fahrzeuges aktiviert werden. Beispielsweise findet die Aktivierung mit dem Öffnen der Fahrertür und/oder durch das Entriegeln des Türinnengriffs und/oder bei Erkennen eines leeren Fahrersitzes über Sitzbelegungssensoren statt, um eine mögliche Auswahl von Betriebsparametern zu nennen, wovon eine Aktivierung abhängig gemacht werden kann. Gemäß einer Weiterbildung der Erfindung ist die automatische Aktivierung der Parksperre in Abhängigkeit vom Abstellen der Brennkraftmaschine besonders vorteilhaft.

Soll beispielsweise ausnahmsweise bei Vorliegen dieser Betriebsparameter bzw. Betriebszustände keine Parksperre eingelegt werden, muss der Fahrer dies zuvor bewusst durch eine aktive Handlung signalisieren. Hierzu sind direkt oder indirekt manuell zu betätigende Mittel vorgesehen, die mit der elektronischen Einheit zur automatischen Aktivierung der Parksperre zusammenwirken. Diese Mittel haben vorzugsweise eine Funktion zur Folge, die mit dem Steckenlassen eines mechanischen Zündschlüssels vergleichbar sind.

Gemäß einer ersten Möglichkeit ist hierfür zur willkürlichen Verhinderung der automatischen Aktivierung der Parksperre ein direkt manuell zu betätigender Taster in Form eines AUS-Tasters mit der elektronischen Einheit verbunden. Der Fahrer betätigt den AUS-Taster, wodurch beispielsweise das elektronische Zugangs-/Fahrberechtigungssystem ausgeschaltet wird. D. h. beispielsweise, dass eine Berechtigungsnachweiseinrichtung (z. B. drahtlos kommunizierende Code-Karte) deaktiviert wird. Somit ist auch ein Verriegeln des Fahrzeuges nicht mehr möglich. Die Funktion dieses elektronischen Zugangs- bzw. Fahrberechtigungssystems wird beispielsweise einem fahrzeugfesten Speicher (ähnlich dem aus der DE 198 23 707 A1 bekannten zusätzlichen in einem Schacht verriegelten Speicher), der im Fahrzeug verbleibt, zugeteilt. Die Funktion des elektronischen "Schlüssels" verbleibt also im Fahrzeug. Dies entspricht dem Steckenlassen eines Zündschlüssel, wodurch der Fahrer naturgemäß besonders aufmerksam bleiben wird. Der Fahrer erhält vorzugsweise eine Mitteilung, dass die Parksperre nun nicht eingelegt wird und das Fahrzeug mit dem elektronischen "Schlüssel" nicht verriegelt werden kann. Weiter kann beispielsweise in dieser Situation das Entfernen des fahrzeugfesten Speichers zum automatischen Aktivieren der Parksperre und zum Verriegeln des Fahrzeugs führen. Ein derartiger AUS-Taster (bzw. AUS-Schalter) kann beispielsweise frei zugänglich in der Instrumententafel, in der Mittelkonsole, am Dachhimmel oder auf dem fahrzeugfesten Speicher vorgesehen und mit einem entsprechenden Symbol versehen werden. Durch eine erneute Betätigung des AUS-Tasters kann die beschriebene Funktion zur Verhinderung der Aktivierung der Parksperre rückgängig gemacht werden. Ein Rückgängigmachen der beschriebenen Funktion kann jedoch auch durch eine vorgegebene Logik, z. B. durch Abfrage der Türkontakte und der Sitzbelegung oder bei Motorstart, automatisch ausgeführt werden.

Gemäß einer zweiten Möglichkeit, bei der das Kraftfahrzeug mittels einer elektronischen Berechtigungsnachweiseinrichtung mit drahtloser Code-Übertragung in Betrieb genommen werden kann, ist die willkürliche Verhinderung der automatischen Aktivierung der Parksperre durch ein Einstecken der Berechtigungsnachweiseinrichtung in einen dafür vorgesehenen Aufnahmeschacht auslösbar. Beispielsweise wird beim Einstecken der Berechtigungsnachweiseinrichtung in den Aufnahmeschacht ein Schalter indirekt manuell betätigt. Eine derartige Berechtigungsnachweiseinrichtung ist beispielsweise eine Code-Karte. Beispielsweise kann ein ohnehin bereits für ein anderes Modul vorgesehener Aufnahmeschacht verwendet werden. Bei einer Berechtigungsnachweiseinrichtung nach der DE 198 23 707 A1 kann die Berechtigungsnachweiseinrichtung, z. B. in Form einer Code-Karte, in den Schacht der Einrichtung zur Aufnahme eines zusätzlichen Speichers nach dessen vorheriger Entnahme eingesteckt werden. Ein derartiger elektronischer "Schlüssel", z. B. in Form einer Code-Karte, eines Transponders oder eines anderen Speichers, muss demnach an einer dafür vorgesehenen Position im Fahrzeug hinterlassen werden. Diese Funktion entspricht ebenfalls dem Steckenlassen eines Zündschlüssel.

Durch diese Erfindung kann ein elektronisches Zugangs- und Fahrberechtigungssystem mit den Anforderungen an die unter dem Begriff Key-Interlock bekannte Funktion komfortabel kombiniert werden.

## Patentansprüche

1. Elektronische Einheit zum automatischen Aktivieren einer Parksperre abhängig von mindestens einem vorgegebenen Betriebsparameter oder Betriebszustand in einem Kraftfahrzeug, mit Mitteln zur willkürlichen Verhinderung der automatischen Aktivierung der Parksperre, **dadurch gekennzeichnet, dass** das Kraftfahrzeug durch eine elektronische Berechtigungsnachweiseinrichtung mit drahtloser Code - Übertragung in Betrieb genommen werden kann, und dass die Einheit Mittel aufweist, durch die die willkürliche Verhinderung der automatischen Aktivierung der Parksperre durch ein Einstecken der Berechtigungsnachweiseinrichtung in einen dafür vorgesehenen Aufnahmeschacht auslösbar ist.

2. Elektronische Einheit nach Patentanspruch 1, **dadurch gekennzeichnet, dass** die Einheit zur willkürlichen Verhinderung der automatischen Aktivierung der Parksperre mit einem direkt manuell zu betätigenden Taster in Form eines AUS-Tasters verbunden ist.

3. Elektronische Einheit nach einem der vorangegangenen Patentansprüche, **dadurch gekennzeichnet, dass** der Betriebszustand zum grundsätzlichen automatischen Aktivieren der Parksperre das Abstellen der Brennkraftmaschine ist.

4. Verfahren zur Verhinderung der automatischen Aktivierung der Parksperre mittels einer elektronischen Einheit nach einem der Patentansprüche 1 bis 3.

## Claims

1. An electronic unit for automatic activation of a parking brake in dependence on at least one set operating parameter or operating state in a vehicle, comprising means for optionally preventing automatic activation of the parking brake, **characterised in that** the vehicle can be operated by an electronic authorisation device with wireless code transmission and the unit comprises means whereby optional prevention of automatic activation of the parking brake can be triggered by inserting the authorisation device into a compartment provided for the purpose.

2. An electronic unit according to claim 1, **characterised in that** the unit for optionally preventing automatic activation of the parking brake is connected to a directly manually operated key in the form of an off key.

3. An electronic unit according to any of the preceding claims, **characterised in that** the operating state for necessary automatic activation of the parking brake is when the engine is switched off.

4. A method of preventing automatic activation of the parking brake by an electronic unit according to any of claims 1 to 3.

## Revendications

1. Unité de commande électronique pour l'activation automatique d'un frein de stationnement en fonction d'au moins un paramètre de fonctionnement ou d'un état de marche prédéterminé dans un véhicule automobile, avec des moyens pour l'empêchement arbitraire de l'activation automatique du frein de stationnement,
**caractérisée en ce que**
le véhicule automobile peut être mis en marche par un dispositif électronique d'autorisation avec une transmission de code sans fil, et l'unité de commande comprend des moyens permettant de lever l'empêchement arbitraire de l'activation automatique du frein de stationnement par une introduction du dispositif d'autorisation dans un puits de réception prévu à cet effet.

2. Unité de commande électronique selon la revendication 1,
**caractérisée en ce que**
l'unité de commande pour l'empêchement arbitraire de l'activation automatique du frein de stationnement est raccordée à une touche se présentant sous la forme d'une touche ARRET à actionner directement à la main.

3. Unité de commande électronique selon l'une quelconque des revendications précédentes,
**caractérisée en ce que**
l'état de marche pour l'activation automatique de principe du frein de stationnement est l'arrêt du moteur à combustion interne.

4. Procédé pour empêcher l'activation automatique du frein de stationnement, au moyen d'une unité de commande électronique selon l'une quelconque des revendications 1 à 3.
